# FASCICULE DE BREVET EUROPEEN

(11) **EP 0 665 783 B1**
(45) Date de publication et mention de la délivrance du brevet: **15.03.2000**
(21) Numéro de dépôt: 94919719.8
(22) Date de dépôt: 16.06.1994
(51) Int. Cl.: B32B 17/10, C03C 27/12

(54) **VITRAGE FEUILLETE COMPORTANT UN MOTIF APPARENT**
VERBUNDGLASSCHEIBE MIT EINEM SICHTBAREN (MOTIV) MUSTER
LAMINATED GLAZING COMPRISING A VISIBLE PATTERN

(30) Priorité: 18.06.1993 FR 9307376
(43) Date de publication de la demande: 09.08.1995
(73) Titulaire: SAINT-GOBAIN VITRAGE, 92400 Courbevoie (FR)
(72) Inventeur: SOL, Jean-Marc, F-45600 Sully-sur-Loire (FR); BOURSIER, Nicole, F-45600 Sully-sur-Loire (FR)
(74) Mandataire: Muller, René
(86) Numéro de dépôt international: FR9400722
(87) Numéro de publication internationale: WO9500329

(56) Documents cités:
- EP-A- 0 319 583
- WO-A-83/03800
- US-A- 3 591 406
- US-A- 4 968 553
- US-A- 5 019 440

## Description

L'invention concerne un vitrage feuilleté comportant, sur au moins une partie de sa surface, un motif apparent. L'invention concerne également son procédé de fabrication.

Par vitrage feuilleté on entend, selon l'invention, un vitrage constitué d'au moins une feuille rigide et d'une feuille souple en matière plastique. Ces vitrages feuilletés peuvent être des vitrages dits symétriques lorsqu'ils comportent deux feuilles rigides en tant que feuilles extérieures. Ces vitrages feuilletés peuvent être dits aussi asymétriques lorsqu'ils comportent une feuille rigide et une feuille souple en tant que feuilles extérieures.

Ces feuilles en matière plastique souple entrant dans la constitution d'un vitrage feuilleté visent à améliorer les propriétés d'un vitrage. Il peut s'agir, par exemple, d'une matière plastique de polyuréthane utilisée en tant que feuille extérieure afin de conférer au vitrage notamment des propriétés de résistance à la rayure. Il peut également s'agir d'intercalaires en polyuréthane ou en polyvinylbutyral ou de toute autre matière. Un intercalaire en polyvinylbutyral améliore, en particulier, la résistance au choc du vitrage.

Les feuilles rigides peuvent également subir des traitements afin d'améliorer leurs caractéristiques. Il est connu, par exemple, de faire subir aux feuilles de verre une trempe chimique ou thermique pour augmenter leur résistance mécanique.

Ces vitrages feuilletés peuvent comporter un motif décoratif et/ou fonctionnel.

Il peut s'agir d'un motif pour décorer le vitrage et/ou le mettre en harmonie avec son environnement. Il peut également servir à protéger, notamment de la lumière, des couches adhésives utilisées pour le montage du vitrage ou pour le montage d'accessoires ou encore pour masquer des bandes collectrices de réseaux chauffants.

Quelle que soit sa fonction, ce motif est apparent.

De ce fait, il doit être exempt de toute détérioration et ce, tout au long de son existence qui peut atteindre une dizaine d'années ou plus. Par détérioration on entend, selon l'invention, toute rayure, tout écaillage, tout débordement ou encore une altération des couleurs du motif, de sa forme. Le fluage du matériau constituant le motif conduit, par exemple, à des débordements ou des imprécisions de forme.

Pour toutes ces raisons, un tel motif est généralement constitué d'un émail dont l'excellente résistance thermique et mécanique est connue. Par ailleurs, l'émail présente l'avantage de posséder un fort pouvoir adhésif vis-à-vis du verre : sa composition contient des frittes de verre susceptibles d'être vitrifiées à haute température, liant ainsi intimement l'émail au support en verre.

Pour fabriquer la couche émaillée on procède, de préférence, au dépôt de l'émail sur le substrat, on sèche ensuite la couche humide formée jusqu'à ce que cette couche présente une adhésion et une tenue suffisantes pour éviter l'apparition de traces sur la couche formée lors de la manipulation du vitrage.

Bien entendu, différentes couches peuvent être ainsi déposées. On traite finalement la ou les couche(s) émaillée(s) par un traitement thermique à haute température afin de vitrifier l'émail et obtenir le revêtement définitif.

Pour des raisons de coût énergétique, ce traitement thermique à haute température est généralement associé aux traitements thermiques utilisés pour la transformation de la feuille de verre, par exemple pour le bombage ou pour le renforcement thermique de la feuille de verre.

Ce procédé donne entièrement satisfaction lorsqu'il est destiné à être appliqué sur un vitrage bombé et/ou renforcé thermiquement, éventuellement feuilleté.

Cependant, il nécessite un traitement thermique supplémentaire, coûteux, lorsque le vitrage n'est pas de forme bombée ou n'est pas renforcé thermiquement.

Par ailleurs, le procédé d'émaillage est incompatible avec le traitement de renforcement chimique. La couche émaillée constitue, en quelque sorte, une barrière s'opposant aux traitements par échange d'ions visant à renforcer chimiquement la surface du verre supportant la couche d'émail. D'autre part, le procédé d'émaillage effectué après le traitement de trempe chimique nuit au renforcement du verre.

La présente invention obvie à ces inconvénients.

La présente invention propose, en particulier, un vitrage feuilleté comportant un motif apparent quel que soit le type du vitrage.

L'invention propose, en particulier, un vitrage feuilleté bombé, renforcé chimiquement, comportant un motif apparent, obtenu dans des conditions industrielles satisfaisantes.

L'invention propose également un procédé pour produire un motif sur des vitrages feuilletés, procédé s'affranchissant d'un traitement thermique à haute température.

Le vitrage feuilleté selon l'invention est défini à la revendication 1.

L'encre à base de résine époxy comporte un diluant et de pigments organiques et/ou inorganiques. Elle peut être noire ou de couleur, y compris le blanc. Cette couche est déposée sur une face interne d'une feuille constituant le vitrage feuilleté pour la protéger des aléas de l'extérieur. On appelle face interne d'une feuille la face qui n'est pas en contact avec l'extérieur. Cette couche peut être déposée, selon l'invention, sur la face interne d'une feuille extérieure ou sur n'importe quelle face d'un intercalaire, c'est-à-dire une feuille non extérieure.

Selon l'invention, la couche d'encre est déposée préalablement à l'assemblage du vitrage feuilleté.

Cet assemblage est constitué traditionnellement de deux étapes : un assemblage préliminaire et un assemblage définitif.

Différentes techniques sont utilisées pour procéder à l'assemblage préliminaire.

L'une de ces techniques est la technique dite de calandrage. Les différents éléments destinés à être assemblés, superposés les uns aux autres selon la disposition voulue, sont chauffés et sont soumis à une pression exercée par les rouleaux de la calandreuse. L'action conjuguée du chauffage et de la pression provoque une adhésion entre les différents éléments, les préassemblant.

Une autre technique d'assemblage préliminaire utilise l'action conjuguée du vide et de la chaleur. Les éléments, superposés selon la disposition voulue, sont introduits dans une poche hermétique, elle-même chauffée et soumise à un vide.

L'assemblage définitif est généralement réalisé dans un autoclave où l'ensemble feuilleté préassemblé est soumis à l'action simultanée de la température et de la pression.

Quel que soit le type d'assemblage, il s'effectue sous l'action conjuguée de la pression et de la température, paramètres pouvant atteindre des valeurs, lors de l'assemblage définitif, aussi élevées que 12 bars et 100°C respectivement.

C'est une des raisons pour lesquelles, selon l'art antérieur, des matières colorantes inorganiques, tel l'émail, sont préférées aux autres matières colorantes organiques, du type peinture, les matériaux inorganiques résistant à de telles conditions d'assemblage sans risque de fluage, en particulier.

Certains essais ont été effectués afin de colorer un vitrage feuilleté à l'aide d'une encre organique, voir par example le brevet US-A-4 968 553. Toutefois, dans tous ces essais, les procédés visent à imprégner la feuille de matière plastique de la matière colorante avant l'opération d'assemblage. La matière colorante pénètre alors dans l'épaisseur de la feuille en matière plastique avant d'être soumise à la pression et à la température utilisées lors de l'assemblage. Les risques de détérioration de la coloration semblent alors limités, en particulier les risques de fluage de la matière organique, cette dernière étant, en quelque sorte, fixée dans la matière plastique.

De façon surprenante, les inventeurs ont montré qu'une encre à base de résine époxy déposée sur une feuille et soumise ensuite à l'opération d'assemblage ne subit aucun dommage visible bien qu'elle ne soit pas fixée dans la feuille. Elle est, en quelque sorte, juxtaposée sur la face d'une feuille en matière plastique souple. On peut considérer que l'encre ne pénètre dans son support, lors de l'assemblage, qu'à l'interface entre la feuille en matière plastique souple et la couche d'encre.

Cette encre est constituée notamment de pigments organiques, d'un diluant et d'une résine époxy. Cette base doit posséder des propriétés particulières pour l'application envisagée. Elle doit présenter, en particulier, une adhésion suffisante vis-à-vis de la feuille en matière plastique la supportant, afin qu'après un simple dépôt sur ce support et un séchage, de préférence à température ambiante, le motif ne se détériore pas lors de l'assemblage du vitrage. Le diluant est, par exemple, une solution aqueuse ou un solvant organique susceptible d'ajuster la viscosité de l'encre en vue de l'utilisation envisagée.

Le motif est déposé par sérigraphie.

Ce procédé consiste à enduire d'encre au moins une partie d'une toile comportant un ensemble de pores dont le contour constitue le motif à imprimer. A l'aide d'un racloir, l'encre est transférée de la toile vers le substrat en matière plastique disposé en-dessous de ladite toile afin de constituer le motif désiré. L'encre possède une viscosité suffisamment faible pour permettre ce transfert sans être toutefois trop faible afin d'éviter des bavures sur la feuille en matière plastique souple. L'encre est ensuite séchée par exemple une demi-heure à température ambiante. Les différentes feuilles constituant le vitrage feuilleté pouvant comprendre plusieurs feuilles munies d'au moins une couche d'encre à base de résine époxy sont ensuite assemblées sous l'action conjuguée de la température et de la pression.

Ce procédé est particulièrement simple à mettre en oeuvre. Par ailleurs, il présente l'avantage de pouvoir constituer des motifs d'une grande précision de manière reproductible.

Les motifs selon l'invention peuvent être des bandes droites ou courbes, des figures géométriques, des dessins ou encore des inscriptions numériques ou littérales. Les motifs peuvent affleurer en bord de vitrage. Lorsque le vitrage feuilleté est un vitrage pour un véhicule de transport, en particulier pour l'automobile, ce motif comporte avantageusement une bande formant cadre sur au moins une partie de la périphérie du vitrage et une succession de lignes formées de points dont la grosseur décroît lorsque l'on se rapproche du centre du vitrage. Ce dégradé permet d'obtenir une transition entre la couche de couleur et la zone transparente du vitrage améliorant à la fois le confort du conducteur et l'esthétique du vitrage.

Outre la grande précision des motifs qui peut être obtenue selon l'invention, ces derniers peuvent être unicolores ou multicolores. Le terme couleur englobe selon l'invention le blanc, le noir, le gris ou toute autre couleur. Des variantes ou des effets de couleur peuvent également être produits en superposant différentes couches de couleur. Plusieurs couches de couleur peuvent être superposées sur une même feuille de matière plastique, éventuellement sur la même face. Plusieurs feuilles de matière plastique, sur lesquelles a été déposée au moins une couche de couleur, peuvent également être superposées. Des feuilles sans couche de couleur peuvent être intercalées entre lesdites feuilles comportant au moins une couche de couleur.

Le motif peut être déposé sur une feuille en polyuréthane. Il peut être également avantageusement déposé sur une feuille en polyvinylbutyral. Cette matière présente la caractéristique de posséder une surface rugueuse. La présence de ces mini-aspérités permet l'évacuation de l'air lors de l'assemblage du vitrage feuilleté.

De façon surprenante, la forme du motif selon l'invention peut être aussi précise qu'une inscription, le motif ayant été déposé sur une des deux surfaces subissant, par ailleurs, une transformation superficielle lors de l'assemblage postérieur au dépôt.

L'invention concerne également le procédé de fabrication d'un tel vitrage. Selon ce procédé, on dépose tout d'abord une couche d'encre à base de résine époxy sur une face d'une feuille en matière plastique souple.

Cette feuille munie de la couche d'encre est ensuite séchée, de préférence à température ambiante, puis est assemblée sous l'action conjuguée de la pression et de la température avec au moins une autre feuille constituant le vitrage, selon la disposition voulue.

Selon une variante préférée, on superpose sur la couche d'encre une autre feuille en matière plastique souple, cet ensemble étant ensuite assemblé avec d'autre feuilles en vue d'obtenir un vitrage feuilleté.

On peut également déposer sur plusieurs feuilles en matière plastique souple au moins une couche d'encre, ces feuilles étant ensuite assemblées avec au moins une autre feuille afin de constituer le vitrage feuilleté.

D'autres avantages et caractéristiques de l'invention apparaîtront dans la suite de la description faite en référence aux figures dans lesquelles :
- la figure 1 est une vue d'un motif selon l'invention,
- la figure 2 est une vue d'un autre motif selon l'invention,
- la figure 3 est une coupe transversale d'un vitrage feuilleté selon l'invention,
- la figure 4 est une coupe transversale d'un vitrage feuilleté selon l'invention comportant plusieurs feuilles en matière plastique souple comportant un motif.

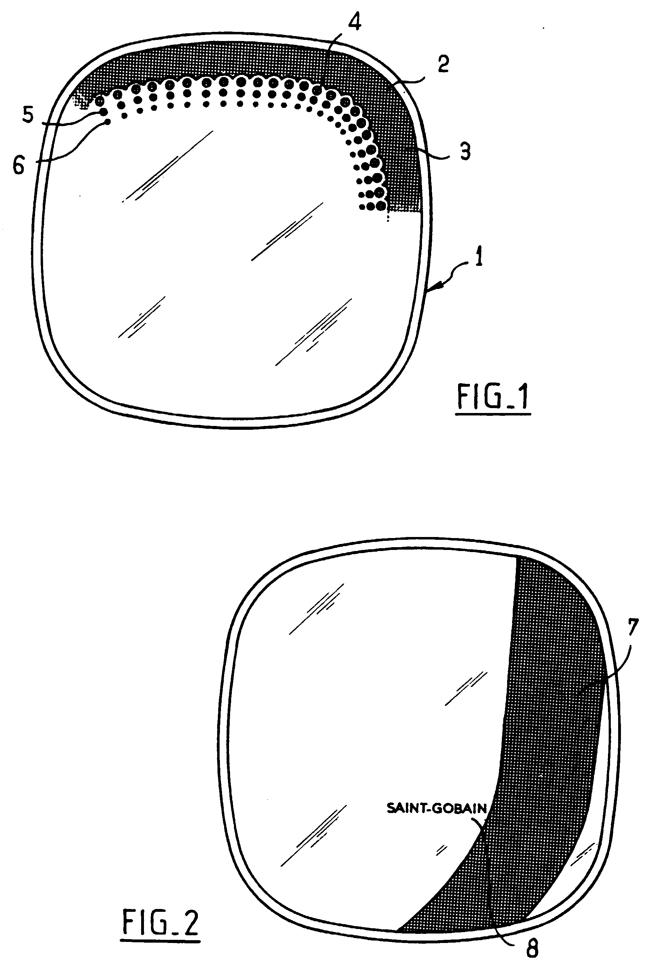

La figure 1 représente un pare-brise 1 pour automobiles. Le motif 2, déposé selon l'invention, est apparent. Il comporte une bande 3 en forme de cache et une succession de lignes formées de points 4, 5, 6 dont la grosseur décroît lorsque l'on se rapproche du centre du vitrage. Cette bande, comme illustré sur la figure, affleure au bord du vitrage. Seule une partie des points est représentée pour des considérations pratiques. Dans l'exemple illustré, les points constituant la ligne 4 sont, par exemple, plus gros que ceux de la ligne 5, eux-mêmes plus gros que ceux de la ligne 6. Les diamètres des points peuvent, par exemple, varier de 3 mm à 1 mm, l'écart de diamètre entre deux lignes successives étant de 0,5 mm. Ce motif suppose une grande précision du procédé de dépôt du motif ainsi qu'une excellente stabilité thermique et mécanique de l'encre constituant le motif. Ce dernier possède une fonction à la fois décorative et fonctionnelle, protégeant de la lumière des bandes adhésives servant à la fixation du vitrage dans la baie de carrosserie et/ou à masquer des réseaux chauffants.

La figure 2 illustre un autre exemple d'un motif pouvant être réalisé selon l'invention. Ce motif comporte une bande courbée 7 et une inscription 8. Ce motif peut, par exemple, être utilisé pour un verre protecteur des phares d'un véhicule, tel un train. Ce motif possède alors une fonction essentiellement décorative.

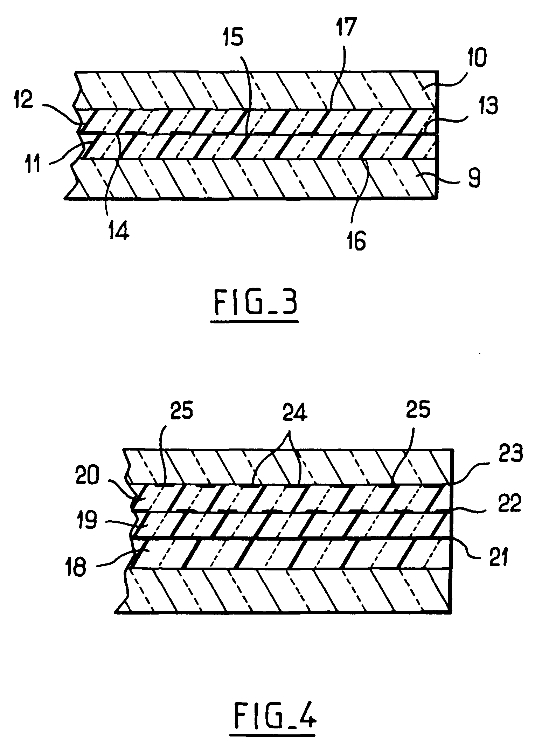

La figure 3 représente une coupe transversale d'un pare-brise feuilleté selon l'invention. Ce pare-brise est constitué de deux feuilles rigides extérieures 9, 10. Ces feuilles rigides peuvent être du polyméthacrylate, du verre, du verre trempé chimiquement ou thermiquement ou toute autre matière rigide transparente. Il s'agit, de préférence, de deux feuilles bombées, en verre, renforcées chimiquement. Deux feuilles en polyvinylbutyral 11 et 12 sont intercalées entre les feuilles rigides 9 et 10. A titre indicatif, l'épaisseur de la feuille rigide est de l'ordre de 4 mm ; l'épaisseur d'une feuille de polyvinylbutyral est de l'ordre de 2 mm.

Le motif apparent est constitué d'une couche de couleur 13 située sur la face 14 de la feuille 11 en polyvinylbutyral, c'est-à-dire en surface de cette face. Elle peut également être située sur la face 15 de la feuille 12 en polyvinylbutyral. Cette couche de couleur peut être constituée d'une bande discontinue de couleur, comme illustré ou encore, d'une bande continue ou bien de motifs précis. Lorsque la couche de couleur est intercalée entre deux feuilles en matière plastique souple, comme illustré sur la figure, son adhésion vis-à-vis de son support est améliorée. Elle peut être également déposée en face 16 ou 17 des feuilles 11 et 12, respectivement.

La figure 4 illustre un exemple de motif comportant des effets de couleur selon l'invention.

Ces effets sont obtenus, d'après la figure, par une superposition de feuilles en polyvinylbutyral 18, 19, 20, chacune d'entre portant une couche de couleur 21, 22, 23 respectivement.

D'après le dessin, la couche 21 est constituée d'une bande continue de couleur. La couche 22 est constituée de touches de la même couleur que la couche 21. Les touches peuvent être de différentes formes, disposées à intervalles réguliers ou non sur la feuille 19. Une couleur plus opaque est ainsi obtenue par intervalles. La couche 23 comporte, sur la figure, des motifs de couleur différente que la couche 21 ou la couche 22 pour obtenir des effets moirés ou un motif bicolore. Ces motifs peuvent être alignés avec les motifs de la couche 22, comme illustré par les motifs 24 ou décalés comme illustré par les motifs 25. Des effets de couleur peuvent ainsi être obtenus ainsi qu'un motif multicolore. Si les couches 21 et 22 sont, par exemple, jaunes et la couche 23 bleue, le motif obtenu selon la figure 4 sera jaune et bleu. Une couche peut, par exemple, être de plusieurs couleurs.

Ces figures illustrent l'invention à titre non limitatif.

Les exemples suivants illustrent la bonne tenue du vitrage selon l'invention, à la fois au rayonnement ultraviolet, à la température, à l'humidité et aux chocs thermiques. La bonne adhésion du motif à une feuille en polyvinylbutyral est également montrée.

### EXEMPLE 1

Des échantillons sont réalisés de la manière suivante : deux feuilles en polyvinylbutyral sont intercalées entre deux feuilles de verre de 4 mm. Une des feuilles de polyvinylbutyral comporte un motif selon l'invention, tel que ce motif soit intercalé entre les deux feuilles de polyvinylbutyral, l'ensemble est ensuite assemblé sous l'action conjuguée de la pression et de la température. Le motif est constitué d'une bande noire, grise ou blanche ainsi que d'une inscription de la même couleur que la bande. L'encre utilisée est à base de résine époxy résultant de la condensation du bisphénol A et de l'épichlorhydrine. Elle est déposée par sérigraphie.

Certains échantillons comprenant les trois couleurs d'encre sont placés en enceinte climatique avec 95 % d'humidité relative et une température de 54°C.

Après un séjour de 30 jours, aucune modification n'est visible aussi bien pour les encres noire, grise ou blanche.

D'autres échantillons sont placés en enceinte climatique programmée selon le cycle suivant : la température initiale est de -40°C. Elle monte jusqu'à 80°C en 2 heures et est maintenue 4 heures à cette température. Elle redescend ensuite à -40°C en 2 heures puis elle est maintenue à cette valeur pendant 4 heures.

Après 100 cycles, aucune dégradation des échantillons n'est visible aussi bien pour les encres noire, grise ou blanche.

Des échantillons, constitués des deux feuilles an polyvinylbutyral entre lesquelles est placée une couche à base d'encre constituant le motif, sont mis dans un autoclave dans lequel la température atteint 125°C sous une pression de 12 bars environ. Après un séjour d'une durée de 2 heures environ, aucune dégradation des encres noire, grise ou blanche n'est visible.

Cet exemple illustre la bonne résistance thermique de l'encre utilisée.

### EXEMPLE 2

Des échantillons identiques à ceux décrits dans l'exemple 1 sont confectionnés. L'encre est de couleur noire ou grise.

Les échantillons sont soumis au test de résistance au rayonnement ultraviolet décrit dans la norme ASTM-G-5377. Ils subissent pendant 16 heures une exposition au rayonnement ultraviolet à 55°C suivie de 8 heures de condensation à 45°C, l'humidité relative étant de 100 %.

Après 60 cycles, aucune dégradation n'est visible.

Cet exemple illustre la résistance améliorée au rayonnement ultraviolet du vitrage selon l'invention.

### EXEMPLE 3

Des éprouvettes 1 en verre de 8 x 8 cm sont revêtues d'une feuille de polyvinylbutyral sur laquelle a été déposée par sérigraphie selon l'invention une encre noire, grise ou blanche. Cette encre est identique à celle décrite dans l'exemple 1. Elle est située à l'interface entre la feuille de verre et la feuille de polyvinylbutyral. On découpe une languette de 1 cm de large dans la feuille de polyvinylbutyral et on la décolle sur 3 cm.

Des éprouvettes 2 en verre de 8 x 8 cm sont revêtues de deux feuilles en polyvinylbutyral entre lesquelles est intercalée selon l'invention, une encre noire, grise ou blanche déposée par sérigraphie. Cette encre est identique à celle décrite dans l'exemple 1.

On découpe une languette de 1 cm de large dans la feuille de polyvinylbutyral dont une des faces est libre, c'est-à-dire non supportée par la feuille de verre, et on la décolle sur 3 cm.

Le test consiste à tirer sur la languette, perpendiculairement à la surface du verre. On mesure la force nécessaire pour le pelage.

La force nécessaire pour peler l'éprouvette 1 est égale à 10 Newtons, alors que la force nécessaire pour peler l'éprouvette 2 est égale à 20 Newtons.

Cet exemple illustre l'adhésion améliorée du motif déposé entre deux feuilles de matière plastique souple.

## Revendications

1. Vitrage feuilleté comportant au moins un motif apparent, ledit vitrage étant constitué d'au moins une feuille rigide en verre ou en matière plastique et d'au moins une feuille en matière plastique souple, caractérisé en ce que le motif est formé d'au moins une couche d'encre à base de résine époxy située sur une face interne de ladite feuille en matière plastique souple, de telle sorte que la couche d'encre soit juxtaposée sur ladite face interne, sans pénétrer essentiellement dans son support en matière plastique souple, l'encre comportant lors de son dépôt un diluant, et la couche d'encre ayant été déposée par sérigraphie puis séchée avant l'application pour assemblage d'une autre feuille constituant le vitrage feuilleté contre ladite face interne de la feuille en matière plastique souple.

2. Vitrage selon la revendication 1, caractérisé en ce que la couche d'encre est une couche d'encre noire ou de couleur.

3. Vitrage selon la revendication 2, caractérisé en ce que l'encre comprend des pigments, un diluant et une résine époxy.

4. Vitrage feuilleté selon la revendication 1, caractérisé en ce qu'au moins une face interne de la feuille en matière plastique souple est revêtue d'au moins une couche d'encre formant, au moins partiellement, le motif.

5. Vitrage selon la revendication 4, caractérisé en ce que la feuille en matière plastique souple revêtue d'une couche d'encre est une feuille en polyuréthane.

6. Vitrage selon la revendication 4, caractérisé en ce que la feuille en matière plastique souple revêtue d'une couche d'encre est une feuille en polyvinylbutyral.

7. Vitrage selon la revendication 4 ou 5, caractérisé en ce qu'au moins une couche d'encre est placée entre deux feuilles en matière plastique souple.

8. Vitrage selon la revendication 7, caractérisé en ce que les deux feuilles en matière plastique souple sont revêtues d'au moins une couche d'encre.

9. Vitrage selon l'une des revendications précédentes, caractérisé en ce que le motif comporte une bande formant cadre sur au moins une partie de la périphérie du vitrage.

10. Vitrage selon la revendication 9, caractérisé en ce que le motif comporte des lignes formées de points dont la grosseur décroît lorsque l'on se rapproche du centre du vitrage.

11. Vitrage selon l'une des revendications précédentes, caractérisé en ce que les feuilles rigides sont des feuilles de verre bombées et renforcées chimiquement.

12. Procédé de fabrication d'un vitrage feuilleté comportant un motif apparent et constitué d'au moins une feuille rigide et d'au moins une feuille en matière plastique souple, caractérisé en ce qu'au moins une couche d'encre à base de résine époxy est déposée par sérigraphie sur une face d'une feuille en matière plastique souple, cette couche d'encre est ensuite séchée, puis une autre feuille constituant du vitrage feuilleté est appliquée sur la face ainsi munie d'une couche d'encre et lesdites feuilles sont assemblées sous l'action conjuguée de la pression et de la temperature.

13. Procédé selon la revendication 12, caractérisé en ce que l'autre feuille est une feuille en matière plastique souple et en ce que l'ensemble est ensuite assemblé avec encore d'autres feuilles constituants du vitrage feuilleté.

14. Procédé selon la revendication 13, caractérisé en ce que plusieurs feuilles en matière plastique souple, sur lesquelles a été déposée au moins une couche d'encre, sont assemblées avec au moins une autre feuille afin de constituer un vitrage feuilleté.

## Claims

1. Laminated glazing incorporating at least one visible pattern, said glazing being constituted by at least one rigid plastics material or glass sheet and at least one flexible plastics material sheet, characterized in that the pattern is formed by at least one epoxy resin-based ink coating on a inner face of said flexible plastics material sheet, so that the ink coating is juxtaposed on said inner face without essentially penetrating into its flexible plastics material support, the ink incorporating during its deposition a diluent, and the ink coating is deposited by screen printing and then dried prior to applications for assembly of another sheet constituting the laminated glazing against said inner face of the flexible plastics material sheet.

2. Glazing according to claim 1, characterized in that the ink coating is a black or coloured ink coating.

3. Glazing according to claim 2, characterized in that the ink incorporates pigments, a diluent and an epoxy resin.

4. Laminated glazing according to claim 1, characterized in that at least one inner face of the flexible plastics material sheet is coated with at least one ink coating at least partly forming the pattern.

5. Glazing according to claim 4, characterized in that the flexible plastics material sheet coated with an ink coating is a polyurethane sheet.

6. Glazing according to claim 4, characterized in that the flexible plastics material sheet coated with an ink coating is a polyvinyl butyral sheet.

7. Glazing according to claim 4 or 5, characterized in that at least one ink coating is placed between two flexible plastics material sheets.

8. Glazing according to claim 7, characterized in that the two flexible plastics material sheets are coated with at least one ink coating.

9. Glazing according to at least one of the preceding claims, characterized in that the pattern has a strip forming a frame on at least part of the periphery of the glazing.

10. Glazing according to claim 9, characterized in that the pattern has lines formed by dots, whose size decreases on approaching the centre of the glazing.

11. Glazing according to one of the preceding claims, characterized in that the rigid sheets are chemically reinforced, bent glass sheets.

12. Process for the production of a laminated glazing incorporating a visible pattern and constituted by at least one rigid sheet and at least one flexible plastics material sheet, characterized in that at least one epoxy resin-based ink coating is deposited by screen printing on one face of a flexible plastics material sheet, said ink coating is then dried, then another sheet constituting the laminated glazing is applied to the face provided in this way with an ink coating and said sheets are assembled under the joint action of pressure and temperature.

13. Process according to claim 12, characterized in that the other sheet is a flexible plastics material sheet and in that the assembly is then assembled with other constituent sheets of the laminated glazing.

14. Process according to claim 13, characterized in that several flexible plastics material sheets, on which has been deposited at least one ink coating, are assembled with at least one other sheet in order to form a laminated glazing.

## Patentansprüche

1. Verbundverglasung, welche wenigstens ein sichtbares Muster umfaßt, wobei die Verglasung aus mindestens einer starren Scheibe aus Glas oder Kunststoff und mindestens einer Folie aus nachgiebigem Kunststoff besteht, **dadurch gekennzeichnet, daß** das Muster aus mindestens einer Schicht aus einer Druckfarbe auf der Basis von Epoxidharz gebildet ist, die sich derart auf einer Innenseite der Folie aus nachgiebigem Kunststoff befindet, daß die Druckfarbenschicht auf dieser Innenseite abgelagert ist, ohne wesentlich in ihren Träger aus nachgiebigem Kunststoff einzudringen, wobei die Druckfarbe beim Auftragen ein Verdünnungsmittel enthält und die Druckfarbenschicht durch Siebdruck aufgebracht und anschließend, für den Zusammenbau vor dem Anlegen einer anderen Scheibe, die ein Bestandteil der Verbundverglasung ist, an die Innenseite der Folie aus nachgiebigem Kunststoff getrocknet worden ist.

2. Verglasung nach Anspruch 1, **dadurch gekennzeichnet, daß** die Druckfarbenschicht eine Schicht aus schwarzer oder bunter Druckfarbe ist.

3. Verglasung nach Anspruch 2, **dadurch gekennzeichnet, daß** die Druckfarbe Pigmente, ein Verdünnungsmittel und ein Epoxidharz umfaßt.

4. Verbundverglasung nach Anspruch 1, **dadurch gekennzeichnet, daß** wenigstens eine Innenseite der Folie aus nachgiebigem Kunststoff mit mindestens einer Druckfarbenschicht überzogen ist, die, wenigstens teilweise, das Muster bildet.

5. Verglasung nach Anspruch 4, **dadurch gekennzeichnet, daß** die mit einer Druckfarbenschicht überzogene Folie aus nachgiebigem Kunststoff eine Polyurethanfolie ist.

6. Verglasung nach Anspruch 4, **dadurch gekennzeichnet, daß** die mit einer Druckfarbenschicht überzogene Folie aus nachgiebigem Kunststoff eine Polyvinylbutyralfolie ist.

7. Verglasung nach Anspruch 4 oder 5, **dadurch gekennzeichnet, daß** mindestens eine Druckfarbenschicht zwischen zwei Folien aus nachgiebigem Kunststoff angeordnet ist.

8. Verglasung nach Anspruch 7, **dadurch gekennzeichnet, daß** die beiden Folien aus nachgiebigem Kunststoff mit mindestens einer Druckfarbenschicht überzogen sind.

9. Verglasung nach einem der vorhergehenden Ansprüche, **dadurch gekennzeichnet, daß** das Muster ein Band umfaßt, das auf wenigstens einem Teil des Umfangs der Verglasung einen Rahmen bildet.

10. Verglasung nach Anspruch 9, **dadurch gekennzeichnet, daß** das Muster Linien enthält, die aus Punkten gebildet sind, deren Größe mit der Annäherung an die Mitte der Verglasung abnimmt.

11. Verglasung nach einem der vorhergehenden Ansprüche, **dadurch gekennzeichnet, daß** die starren Scheiben gebogene und chemisch vorgespannte Glasscheiben sind.

12. Verfahren zur Herstellung einer Verbundverglasung, welche ein sichtbares Muster umfaßt und aus mindestens einer starren Scheibe und mindestens einer Folie aus nachgiebigem Kunststoff besteht, **dadurch gekennzeichnet, daß** mindestens eine Schicht aus einer Druckfarbe auf der Basis von Epoxidharz durch Siebdruck auf einer Seite einer Folie aus nachgiebigem Kunststoff aufgebracht wird, die Druckfarbenschicht anschließend getrocknet wird, danach eine andere Scheibe, die Bestandteil der Verbundverglasung ist, an die Seite angelegt wird, welche mit einer Druckfarbenschicht versehen ist, und die Scheiben durch die gemeinsame Wirkung von Druck und Temperatur miteinander verbunden werden.

13. Verfahren nach Anspruch 12, **dadurch gekennzeichnet, daß** die andere Scheibe eine Folie aus nachgiebigem Kunststoff ist, und daß der Zusammenbau anschließend mit noch anderen Scheiben verbunden wird, die Bestandteile der Verbundverglasung sind.

14. Verfahren nach Anspruch 13, **dadurch gekennzeichnet, daß** mehrere Folien aus nachgiebigem Kunststoff, auf welchen mindestens eine Druckfarbenschicht aufgetragen worden ist, mit wenigstens einer anderen Scheibe verbunden werden, um eine Verbundverglasung zu bilden.
